# EUROPEAN PATENT SPECIFICATION

(11) **EP 3 466 025 B1**
(45) Date of publication and mention of the grant of the patent: **11.09.2024**
(21) Application number: 17727838.9
(22) Date of filing: 24.05.2017
(51) Int. Cl.: H04L 65/1033, H04L 65/1053, H04L 69/14, H04L 43/50

(54) **MODIFYING AN ELECTRICAL PARAMETER IN AN ANALOG SERVICE**
MODIFIZIERUNG EINES ELEKTRISCHEN PARAMETERS IN EINEM ANALOGEN DIENST
MODIFICATION D'UN PARAMÈTRE ÉLECTRIQUE DANS UN SERVICE ANALOGIQUE

(30) Priority: 27.05.2016 DE 102016109807
(43) Date of publication of application: 10.04.2019
(73) Proprietor: ADTRAN GmbH, 10557 Berlin (DE)
(72) Inventor: ALMS, Henrik, 18516 Kreutzmannshagen (DE); DEUTSCHER, Jan, 17489 Greifswald (DE); BÖHME, Olaf, 12439 Berlin (DE); SINDERMANN, Carsten, 17498 Weitenhagen (DE)
(74) Representative: Brachmann, Roland W.
(86) International application number: PCT/EP2017/062610
(87) International publication number: WO 2017/202951

(56) References cited:
- WO-A1-01/13624
- US-A1- 2003 133 437
- US-A1- 2011 080 904

## Description

The invention relates to a network component and a method for modifying an electrical parameter in an analog communication service. The invention is defined by the independent claims. Further embodiments of the invention are defined by the dependent claims. Although the invention is only defined by the claims, the below embodiments, examples and aspects are present for aiding in understanding the background and advantages of the invention.

US 2003/0133437 A1 refers to a DSL feature for enabling POTS on digital lines in the event of a power failure.

The need for information exchange and communication has drastically increased. There exists a plurality of different network and communication services that are to be provided to a customer premises equipment (CPE). These services may distinguish in topology, physical and logical infrastructure, transmission paths, content, speed and so on.

An example of these services is the Plain Old Telephone Service (POTS). This POTS is a standard analog telephone service and it did exist before digital services such as Integrated Services Digital Network (ISDN), Digital Subscriber Line (xDSL), Voice over IP (VoIP) services were introduced.

POTS is provided to the CPE via a subscriber line. With the transition to digital services, the actual length of a subscriber line supplying a digital service is oftentimes shortened. This is also based on the fact the short subscriber lines are required for a high quality or bandwidth of a digital service.

Such shortened subscriber lines are also used for POTS signals, which result in audible noise and/or crosstalk.

The **problem** to be solved is to overcome these drawbacks by improving the analog communication service via subscriber lines.

This problem is solved according to the features of the independent claims. Further embodiments result from the depending claims.

In order to overcome this problem, a network component is provided, which is configured to:
- providing an analog communication service to at least one customer premises equipment via a subscriber line; and
- setting at least one electrical parameter of the analog communication service based on a criterion of the subscriber line;
- wherein the network component is a multi-service-access-node or at least a component thereof; and
- wherein the network component comprises a subscriber line test component for determining the criterion of the subscriber line ,
- wherein the at least one coefficient is used to generate an analog signal for the analog communication service.

The network component may be a component of a communications network, e.g., comprising voice and/or data communication. The network component may be a multi-service-access-node (MSAN) or a line card. The network component may interface with at least one, in particular with a plurality of customer premises equipments (CPEs). The network component can provide analog and/or digital services to at least one subscriber line.

The analog communication service may comprise an analog communication service, in particular analog voice communication, analog telephony and/or analog data communication such as analog facsimile. The analog communication service may employ analog signal transmission over a subscriber line.

The subscriber line may be connected to a CPE at a subscriber's home. A connected subscriber line may also be referred to as subscriber loop. The subscriber line may comprise of a pair of wires, referred to as a- and b-wire (also known as ring- and tip-wire). The subscriber line may be a twisted pair cable.

In an embodiment, the criterion of the subscriber line is determined by measurement. Such measurement may be conducted once during an initialization phase of the network component resulting in determining and storing the criterion. The criterion can be used for modifying the electrical parameter.

It is also an option that the measurement is conducted when an analog communication service is to be provided across the subscriber line.

The at least one electrical parameter can be flexibly set, adjusted or modified based on a condition (the criterion) to reduce or limit any disturbance that would otherwise be caused by the at least one electrical parameter when it is conveyed towards the CPE. Hence, a subscriber line may dictate a criterion for set the at least one electrical parameter.

This setting or modifying of the at least one electrical parameter may reduce noise and/or crosstalk induced to the CPE or any other CPE or subscriber line.

It is an option to utilize such setting once per call.

In an embodiment, the analog communication service is the Plain Old Telephone Service.

In an embodiment, the at least one electrical parameter comprises a signaling information.

Signaling information may require electrical parameters (signals) of a predetermined amplitude and/or frequency (repetition of signal pulses).

In an embodiment, the signaling information is at least one of the following:
- a ringing;
- an information tone;
- a call-progress tone;
- a dial tone; and/or
- a metering impulse.

In an embodiment, the electrical parameter is a voltage or a current.

The subscriber line may carry a voltage and/or a current of a predetermined amplitude. This amplitude can be adjusted by setting the at least one electrical parameter.

In an embodiment, the network component further comprises a subscriber line test component for determining the criterion of the subscriber line.

Via the subscriber line test component the network component is capable of monitoring and/or testing the individual subscriber line(s). The line test component may be provided by an Integrated Line Test Function (II,TF) module. One dedicated subscriber line test component may be used for several network components, in particular for several line cards.

In an embodiment, the network component is configured to detect a condition of the at least one customer premises equipment.

A condition of the CPE may be based on a change of a state at the CPE, e.g., an off-hook condition (e.g., the picking up the telephone receiver by the user).

Additionally or alternatively, the condition may be a preceding off-hook condition (e.g., a ring tone, a call-progress tone). Hence, the at least one electrical parameter is set based on a previously determined condition.

In an embodiment, the criterion of the subscriber line is at least one of the following:
- a resistance of the subscriber line;
- a resistance loop of the subscriber line;
- a capacitance of the subscriber line;
- an inductance of the subscriber line;
- a feeding voltage applied to the subscriber line;
- a feeding current applied to the subscriber line.

A subscriber line may in particular be arranged between the CPE and the network component.

As an option, at least one of the above mentioned criteria may be stored in a memory. Also, the at least one criterion can be compared with a value stored in a memory, in particular in a lookup-table.

In an embodiment, the network component further comprises a digital signal processor to modify the at least one electrical parameter of the analog communication service.

In an embodiment, at least one the coefficient of the digital signal processor is supplied or provided by an external device.

In an embodiment, the network component is further configured to provide at least one digital service to the at least one customer premises equipment via the subscriber line.

The digital service may be one of the following: ISDN, xDSL, VOIP, IPTV.

The digital service can be provided via the same physical subscriber line and may be transmitted simultaneously.

In an embodiment, the network component is further configured to provide at least one additional analog communication service and/or at least one digital service to at least one additional customer premises equipment via at least one additional subscriber line.

Also, a method is suggested for providing an analog communication service, the method comprising:
- modifying an electrical parameter of the analog communication service based on a criterion of the subscriber line;
- wherein the network component is a multi-service-access-node or at least a component thereof;
- wherein the network component comprises a subscriber line test component for determining the criterion of the subscriber line;
- wherein the at least one coefficient is used to generate an analog signal for the analog communication service.

In an embodiment, the method further comprises:
- detecting a condition of the at least one customer premises equipment and determining the criterion based on this condition.

In an embodiment, the method further comprises:
- determining the criterion of the subscriber line.

A system is provided, comprising:
- a network component as described herein; and
- at least one customer premises equipment connected to the network component via the subscriber line.

In an embodiment, the system further comprises:
- at least one additional customer premises equipment connected to the network component via at least one additional subscriber line.

A computer program product is suggested, which is directly loadable into a memory of a digital computer, comprising software code portions for performing the steps of the method described herein.

A computer-readable medium provided having computer-executable instructions adapted to cause a computer system to perform the steps of the method as described herein.

It is noted that the steps of the method stated herein may be executable on the network component.

It is further noted that the above mentioned network component can comprise at least one, in particular several means that are arranged to execute the steps of the method described herein. The means may be logically or physically separated; in particular several logically separate means could be combined in at least one physical unit.

Furthermore, the problem stated above is solved by a system comprising the network component as described above and at least one CPE connected to the network component via a subscriber line.

Said network component may comprise at least one of the following: a processor, a microcontroller, a hard-wired circuit, an ASIC, an FPGA, a logic device.

Embodiments are shown and illustrated with reference to the drawings. The drawings serve to illustrate the basic principle, so that only aspects necessary for understanding the basic principle are illustrated. The drawings are not to scale. In the drawings the same reference characters denote like features. These exemplary embodiments do not limit the scope of the invention. The same reference signs in different drawings indicate the same elements/components or at least the same functions unless otherwise stated.
- Fig. 1: shows a schematic view of an exemplary hardware setup comprising a multi-service-access-network for providing the POTS to a customer premises equipment;
- Fig.2: shows a schematic view of another exemplary hardware setup comprising a multi-service-access-network for providing the POTS and a digital service to a customer premises equipment;
- Fig.3: shows a schematic view of another exemplary hardware setup comprising a multi-service-access-network for a determining of a subscriber line criterion; and
- Fig.4: shows an exemplary flow diagram comprising steps of a method for modifying at least one electrical parameter for providing an analog communication service.

As an example, a network component and a method for providing of an analog communication service, such as the POTS, via the network component to a customer premise equipment (CPE) is proposed, wherein at least one electrical parameter for the analog communication service is modified based on a criterion of the subscriber line.

The network component may be a multi-service-access-node (MSAN) or at least a component thereof. The MSAN connects at least one subscriber line to a core network to provide at least an analog and/or at least one digital service from a single platform. An MSAN may comprise a narrowband service (the POTS), a broadband service (xDSL), a battery with a rectifier, an optical transmission unit or a copper distribution frame.

The network component may provide a number of (subscriber line) ports for digital services, such as internet access and/or for analog communication service, such as the POTS via subscriber lines. The subscriber line may be a physical wire, a phone cable or a coax cable to connect the network component with the CPE. Each of the ports may establish a voice or data connection according to specific DSL and/or G.fast recommendations. It is noted that DSL or G.fast are mentioned as exemplary digital communication standards. However, other communication standards may be used accordingly.

In addition, the network component may provide transport of data traffic via an uplink media, which may be at least one optical fiber connected to a telecommunication service network and/or a POTS network.

The network component may provide switching and/or routing functions for the voice and/or data traffic. As an option, the network component may comprise a memory for storing electrical parameter of the POTS temporarily or persistently.

In an embodiment, the network component is or comprises a line card. The line card may comprise an electronic circuit designed to interface with a service access network. The line card may be connected to at least one subscriber line. On the other side, such subscriber line may be connected to a customer premises equipment, which may be a telephone, modem, or any telecommunication processing device.

The line card may provide analog-to-digital and/or digital-to-analog conversion for voice, data, off-hook detection, ring supervision, line integrity tests, and other BORSCHT functions. BORSCHT is an acronym for battery feed (B), over-voltage protection (O), ringing (R), signaling (S), coding (C), hybrid (H), and test (T). The line card may generate a ringing current and decode Dual Tone Multi Frequency (DTMF) signals, it may further terminate the subscriber line supporting analog communication service. Some line cards may be capable of terminating more than one type of service.

The POTS may use a bi-directional (full duplex) communication via the subscriber line. The communication of voice data may optionally be limited to a narrow frequency range from 300 Hertz to 3400 Hertz (voice band). The POTS may use balanced signaling of a voltage on a two-wire copper loop with a nominal DC voltage amounting to 48V. The POTS may also provide the BORSCHT functions.

The POTS is supplied over a subscriber line. The subscriber line may comprise a twisted pair of wires, referred to as a- and b-wire (also known as ring- and tip-wire). The subscriber line is switched or connected to a subscriber's home. If connected, the subscriber line may be referred to as a subscriber loop.

For signaling purposes, the POTS uses, e.g., metering, ring tones, dial tones, call-progress tones and/or information tones to signal different information and/or statuses to/from the CPE.

A telephone network provider may offer a metering service (also known as "advice of charge" or Teletax) to its telephone subscriber(s). This service allows cost control and cost monitoring by each subscriber. A metering service can be realized by a metering signal that comprises impulses of 12 kilohertz or 16 kilohertz, which is an example of the POTS signaling.

Ringing is another example of the POTS signaling used for activating a bell or an electronic sound generator at the CPE for alerting purposes. Ringing may precede off-hook conditions. A ringing tone (or ringback tone) applies to a tone (e.g., in the audible frequency range from 300 Hz to 3400 Hz) which is received by an A-subscriber (=caller) via the telephone receiver or loudspeaker while ringing is sent to a B-subscriber (=callee). Ringing (e.g. 25 Hz) is made audible by dedicated CPE parts (e.g., not the telephone receiver or loudspeaker), e.g., a bell or an electronic sound generator of a telephone set.

Another example signaling via the POTS are call-progress tones which are audible tones conveying the status of a call to the subscriber. The CPE (e.g., telephone) receives dial tones and/or busy tones, which are used to inform the subscriber about the state of the call and/or to trigger an action of the subscriber.

POTS signaling may comprise a dial-tone that is sent when an off-hook condition is detected. It indicates that the service to be provided is active and that a telephone call may be initiated. The dial tone may stop when the first digit is dialed. The dial tone indicates to the subscriber that now digits may be entered.

Information tones are a further example of the POTS signaling used to transmit data to or from the CPE (e.g., a Frequency Shift Key (FSK) tone used for a Calling Line Identification Presentation, CLIP also known as a Caller ID).

Most of the CPEs (e.g., telephones) suffer from insufficient analog signaling suppression. Thus, the POTS signaling may cause a discomforting noise audible to the subscriber. The audible noise increases with an increasing amplitude of the POTS signaling.

With the transition to a digital service, the POTS can be supplied in combination with at least one digital service (e.g., ISDN, DSL, VOIP, IPTV, etc.) via the same subscriber line.

Thus, the analog communication service may also disturb the digital service by introducing crosstalk to the subscriber line, which may be the subscriber line carrying the analog and the digital service or to other subscriber lines that may, e.g., be arranged within the same cable binder.

Crosstalk can be regarded as any effect introduced by the analog communication service (the POTS) on any service, e.g., the analog communication service itself, another analog communication service or a digital service. Crosstalk may comprise: Near-End-Crosstalk (NEXT), Power-Sum-Near-End-Crosstalk (PSNEXT), Far-End-Crosstalk (FEXT), Equal-Level-Far-End-Crosstalk (ELFEXT) and/or Alien-Crosstalk (AXT).

By modifying an electrical parameter of the analog communication service based on the actual subscriber line (e.g., a length of the subscriber line) the disturbance (noise and/or crosstalk) can at least be partially reduced or prevented.

There are several electrical parameters that could be subject to modification in order to mitigate the disturbance, e.g.:
- a voltage and/or a current amplitude of the analog signal (of the POTS);
- a rising edge or a falling edge of the analog signal (e.g., an impulse of the POTS);
- a power amplitude of the analog signal (the POTS).

The electrical parameter may be based on at least one coefficient of a digital signal processor (DSP). This at least one coefficient can be used to generate an analog signal that may result in the POTS signaling. There may be several sets of coefficients, each set contributing to (or shaping) a particular analog signal.

As an option, the at least one coefficient may be supplied by an external device, e.g., a test device and/or a management device.

Beneficially, the electrical parameter may be adjusted such that the analog signal conveyed across the subscriber line is limited with regard to its disturbance such as noise or crosstalk. The analog signals may be adjusted for several subscriber lines, optionally for all subscriber lines, of the network component.

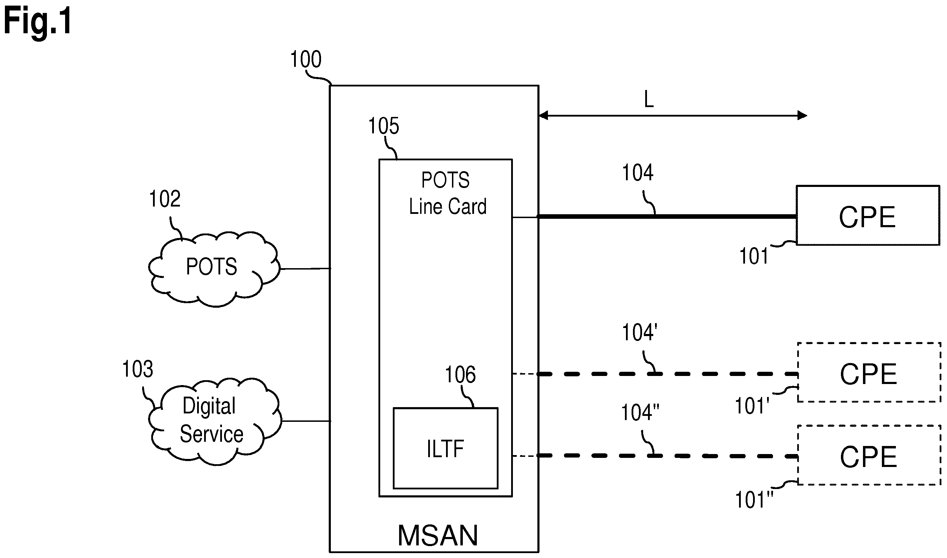

**Fig.1** shows a schematic of an exemplary hardware comprising a MSAN 100 as an example of a network component and at least one CPE 101 that is connected to the MSAN 100 via a subscriber line 104. Further CPEs 101', 101" are connected to the MSAN 100 via further subscriber lines 104', 104" (dashed lines).

The MSAN 100 provides a POTS 102 to the CPE 101 via the subscriber line 104. Therefore, a port of a POTS line card 105 is electrically coupled to the subscriber line 104 to relay the POTS 102 via the subscriber line 104 to the CPE 101.

A subscriber loop resistance is an ohmic resistance comprising the resistance of the subscriber line 104 (including the a- and b-wire, in particular a twisted pair cable) and the resistance value of the CPE 101. A maximum resistance of the subscriber loop in the POTS refers to a maximum length L of, e.g., 5 kilometers of the a-wire or the b-wire, which in this example in total refers to a subscriber line length of 10 kilometers.

By using standardized twisted pair copper cable, the maximum ohmic resistance may amount to 1700 Ohms for a maximum length of 5 kilometers between the CPE 101 and the network component 100.

If the subscriber line 104 may be used for digital services, such as xDSL, G.fast, VOIP, the subscriber line 104 may be substantially shorter than the maximum subscriber line length admissible for the POTS. For instance, VOIP may have a line length L that is less than 1 kilometer.

The electrical parameters of the POTS signaling are set to meet the standardized requirements even if the subscriber line 104 is substantially longer than 1 kilometer. If the POTS signaling is conveyed towards the CPE 101, noise and/or crosstalk may be recognized at the receiver of the CPE 101 or at any of the receivers of the CPEs 101' or 101".

To minimize these disturbances at least one of the electrical parameters of analog signaling towards the CPEs is modified. This may in particular be achieved based on the length L or based on a measurement that determines or estimates this length L of the subscriber line 104.

An Integrated Line Test Function (ILTF) 106 of the POTS line card 105 can be used to monitor or to test the subscriber line 104. The ILTF 106 may thus determine a criterion of the subscriber line 104. The electrical parameter of the POTS signaling may then be adjusted based on this criterion.

Determining the criterion of the subscriber line 104 may comprise at least one of the following:
- measuring an actual resistance and/or capacitance and/or inductance at the port of the POTS line card 105;
- measuring a feeding current that passes through at least one port of the POTS line card 105.

The criterion of the subscriber line 104 may be obtained by measuring a feeding voltage applied at the port of the POTS line card 105. A constant current may be applied to this port. It is also an option that the feeding voltage or current is received or polled without any measurement.

At least one of these determined criteria is used to modify the electrical parameter of the POTS signaling. As an option, a look-up table (LUT) of the network component may be used to determine the actual electrical parameter based on the criterion.

An example might be as follows: A resistance loop of the subscriber line 104 amounts to 850 Ohm and has a length L of 2.5 kilometers. This corresponds to a reduction of 50% (because of half the length of the loop). Thus, POTS signaling may be reduced by 50%, the actual DSP coefficients may be obtained from the lookup-table stored in the network component. Hence, the lookup-table may comprise entries that determine a (range) of reduction in percent and corresponding values of the DSP coefficients. The DSP coefficients can be read from the lookup-table and used to generate adjusted (modified) electrical parameters that result in a reduced amount of disturbance compared to the full amplitude of these electrical parameters.

As an option, the network component may detect an off-hook condition at the CPE 101. This may trigger that the amplitude of the POTS signaling is reduced. In case of a preceding off-hook-condition, a disturbance due to a ringing tone or other signaling preceding the off-hook can be mitigated.

If an impending POTS signaling is detected at the MSAN 100, the ILTF 106 may determine at least one criterion of the subscriber line 104, e.g., by determining the subscriber loop resistance. Depending on this criterion, the amplitude of the POTS signaling may be adjusted. The amplitude may refer to various electrical signals used for signaling purposes, e.g., metering impulses, ringing, dial tones, call-progress tones or information tones.

The electrical parameter to be modified may be represented as at least one coefficient of a DSP, which may be part of the MSAN 100 or the line card 105. This at least one coefficient may be used to generate the analog signal to be conveyed towards the CPE 101. By modifying the at least one coefficient, the respective electrical parameter of the generated POTS signaling is adjusted.

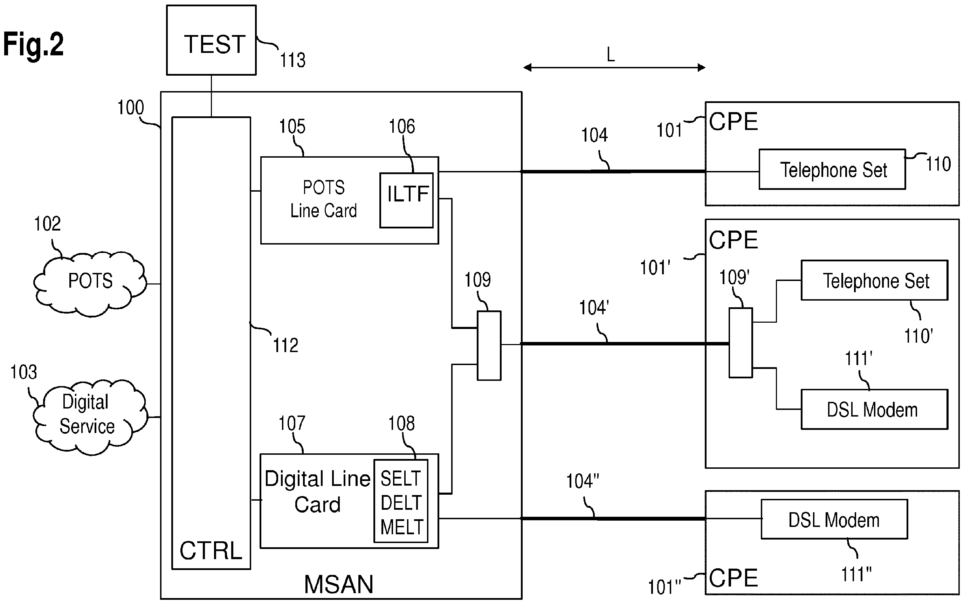

**Fig.2** shows a schematic of another exemplary hardware comprising a MSAN 100 for supplying the POTS 102 and at least one digital service 103 to a CPE 101'. The MSAN 100 comprises a control and switching unit 112, a POTS line card 105, a splitter 109 and a digital line card 107. The POTS line card 105 comprises an ILTF 106 and the digital line card 107 comprises a line test unit 108. The line test unit 108 may provide single ended line test (SELT), double ended line test (DELT) and/or metallic line test (MELT) capabilities. The POTS 102 and/or the digital service 103 may be conveyed across the control and switching unit 112, the POTS line card 105, the digital line card 107 and/or the splitter 109 to the various CPEs 101, 101' and 101".

The digital line card 107 may be a part of a Digital Subscriber Line Access Multiplexer (DSLAM) (not shown).

The CPE 101 comprises a telephone set 110 and is supplied with the POTS 102 by the POTS line card 105 via the subscriber line 104.

The CPE 101' comprises a telephone set 110', a DSL modem 111' and a splitter 109'. The splitter 109' is connected to the telephone set 110' and the DSL model 111'. The splitter 109' is connected to a splitter 109 of the MSAN 100 via a subscriber line 104'. The POTS line card 105 and a digital line card 107 are connected to the splitter 109. The telephone set 110' is supplied with the POTS 102 and the DSL modem 111' is supplied with the digital service 103.

The CPE 101" comprises a DSL modem 111" and is supplied with the digital service 103 by the digital line card 107 via the subscriber line 104".

The control and switching unit 112 can be used to control providing the services 102, 103 towards the CPEs 101, 101' and 101".

A test system 113 can be used to manage testing and monitoring of the MSAN 100. This test system 113 may be arranged to manage the measurement of the subscriber lines 104, 104', 104" to obtain the criterion for modifying the POTS signaling. The test system 113 may supply signaling parameters via an application programming interface (API) to the MSAN 100. The test system 113 may be an external device or it may be a part of the MSAN 100.

The electrical parameter to be modified may be based on at least one coefficient of a DSP, which may be located inside the MSAN 100 or on the line card 105. This at least one coefficient may be used for generating the POTS signaling. The at least one coefficient may be optionally provided by the test system 113.

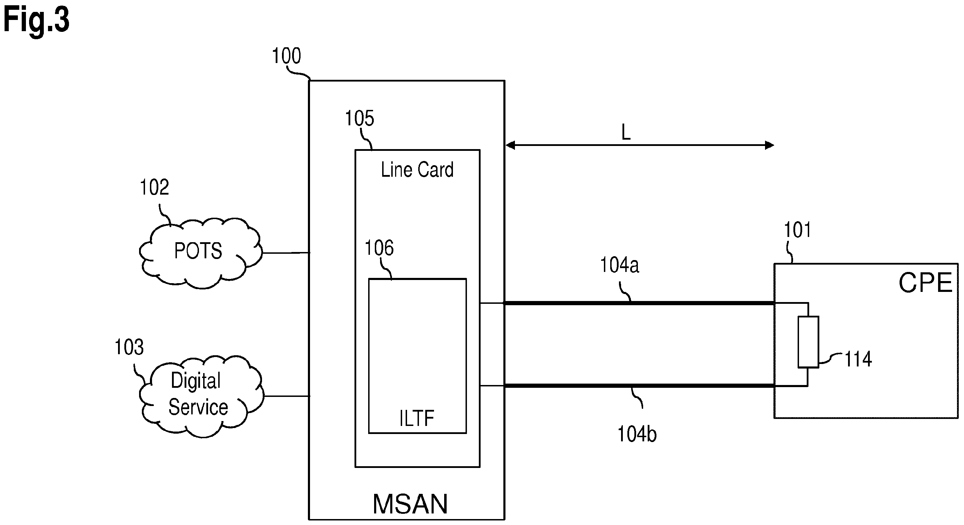

**Fig.3** shows a schematic of another exemplary hardware comprising a MSAN 100 for determining a subscriber line criterion.

The MSAN 100 is connected to a CPE 101 via a subscriber line 104. The subscriber line 104 comprises a twisted pair cable (e.g., copper wires) consisting of wires 104a and 104b.

The MSAN 100 comprises a line card 105, which is used to provision a POTS 102. The line card 105 detects an off-hook condition or a preceding off-hook condition of the CPE 101. In order to modify an electrical parameter of the POTS signaling, the resistance of the line is determined by the line card 105. This resistance comprises the resistances of the wires 104a, 104b and a resistance 114 of the CPE 101. Based on the overall resistance, the electrical parameter for the POTS signaling is modified.

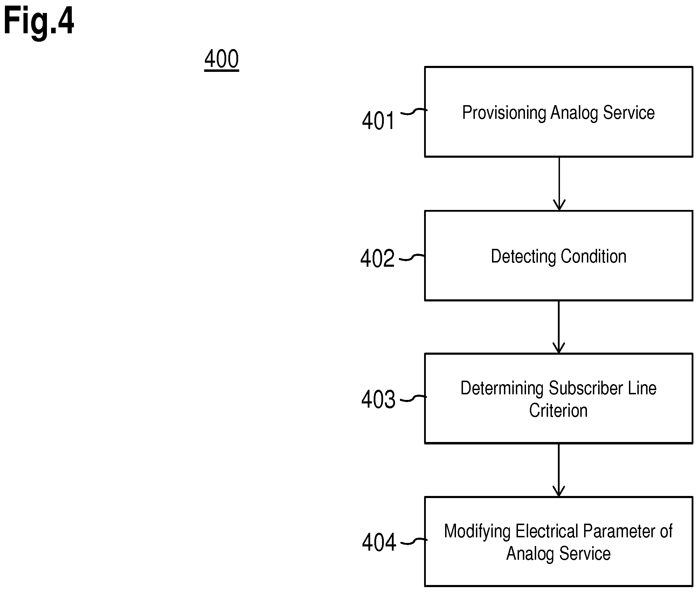

**Fig.4** shows an exemplary flow diagram comprising steps of a method 400 for modifying an electrical parameter for providing an analog communication service.

The method 400 comprises a step 401 in which an analog communication service is provided towards a CPE. In a step 402 an analog signaling condition is detected. Such an analog signaling condition may be an off-hook condition or a preceding off-hook condition of the CPE. In a step 403 a subscriber line criterion is determined and in a step 404 an electrical parameter of the analog signaling of the analog communication service is modified.

If the network component detects an off-hook condition or an preceding off-hook condition, it may start a measurement of the subscriber loop resistance, which is one example of determining a criterion of the subscriber line. Depending on the measurement result, at least one signaling coefficient for the POTS signaling is adjusted. The POTS signaling may comprise metering impulses, ringing, dial tones, call-progress tones and information tones.

It is noted that the at least one coefficient may be provided by an API without any measurement and/or they are subject to at least one measurement cycle.

Instead of the subscriber loop resistance as criterion for the loop length, the feeding voltage (for systems using constant current supply) or the feeding current (for systems using constant voltage supply) can be used. As an alternative or in addition, the capacitance of the a-wire to ground and/or the b-wire to ground (to be measured during on-hook) can be used.

### List of Abbreviations:

- ADSL: Asymmetric Digital Subscriber Line
- API: Application Programming Interface
- CLIP: Calling Line Identification Presentation
- CPE: Customer Premises Equipment
- DSL: Digital Subscriber Line
- DSLAM: Digital Subscriber Line Access Multiplexer
- DSP: Digital Signal Processor
- GigE: Gigabit Ethernet
- IAD: Integrated Access Device
- ILTF: Integrated Line Test Functions
- ISDN: Integrated Services Digital Network
- FSK: Frequency Shift Keying
- LUT: Lookup-Table
- MSAN: Multi Service Access Node
- POTS: Plain Old Telephone Service
- SW: Software
- VDSL: Very High Speed Digital Subscriber Line
- VOIP: Voice over Internet Protocol

## Claims

1. A network component configured to:
- providing an analog communication service (102) to at least one customer premises equipment (101) via a subscriber line (104); and
- setting at least one electrical parameter of the analog communication service (102) based on a criterion of the subscriber line (104), wherein the electrical parameter is based on at least one coefficient of a digital signal processor, wherein the setting of the at least one electrical parameter is for reducing or preventing disturbance of the communication by modifying analog signaling towards the customer premises equipment (101);
- wherein the network component is a multi-service-access-node or at least a component thereof;
- wherein the network component comprises a subscriber line test component (106) for determining the criterion of the subscriber line (104),
- wherein the at least one coefficient is used to generate an analog signal for the analog communication service,
- wherein the network component is further configured to provide at least one digital service (103) to the at least one customer premises equipment (101) via the subscriber line (104).

2. The network component according to any of the preceding claims, wherein the at least one coefficient is supplied by an external device, a test device and/or a management device.

3. The network component according to any of the preceding claims, wherein the analog communication service (102) is the Plain Old Telephone Service.

4. The network component according to any of the preceding claims, wherein the at least one electrical parameter comprises a signaling information.

5. The network component according to claim 4, wherein the signaling information is at least one of the following:
- a ringing;
- an information tone;
- a call-progress tone;
- a dial tone; and/or
- a metering impulse.

6. The network component according to any of the preceding claims, wherein the electrical parameter is a voltage or a current.

7. The network component according to any of the preceding claims, wherein the network component is configured to detect a condition of the at least one customer premises equipment (101).

8. The network component according to any of the preceding claims, wherein the criterion of the subscriber line is at least one of the following:
- a resistance of the subscriber line (104);
- a resistance loop of the subscriber line (104);
- a capacitance of the subscriber line (104);
- an inductance of the subscriber line (104);
- a feeding voltage applied to the subscriber line (104);
- a feeding current applied to the subscriber line (104).

9. The network component according to any of the preceding claims, wherein the digital signal processor is arranged to modify the at least one electrical parameter of the analog communication service (102).

10. The network component according to claim 9, wherein at least one the coefficient of the digital signal processor is supplied or provided by an external device (113).

11. The network component according to any of the preceding claims, wherein the network component is further configured to provide at least one additional analog communication service (102) and/or at least one digital service to at least one additional customer premises equipment (101', 101") via at least one additional subscriber line (104', 104").

12. A method (400) for providing an analog communication service (102) performed by a network component to at least one customer premises equipment (101) via a subscriber line (104), the method comprises the step of:
- modifying (404) an electrical parameter of the analog communication service (102) based on a criterion of the subscriber line (104), wherein the electrical parameter is based on at least one coefficient of a digital signal processor; wherein the modifying of the electrical parameter is for reducing or preventing disturbance of the communication by modifying analog signaling towards the customer premises equipment (101)
- wherein the network component is a multi-service-access-node or at least a component thereof;
- wherein the network component comprises a subscriber line test component (106) for determining the criterion of the subscriber line (104),
- wherein the at least one coefficient is used to generate an analog signal for the analog communication service,
- providing at least one digital service (103) to the at least one customer premises equipment (101) via the subscriber line (104).

13. The method according to claim 12, further comprising:
- detecting (402) a condition of the at least one customer premises equipment (101) and determining the criterion based on this condition.

14. A system comprising:
- a network component according to one of the previous claims 1 to 11; and
- at least one customer premises equipment (101) connected to the network component via the subscriber line (104).

15. The system according to claim 14, further comprising:
- at least one additional customer premises equipment connected to the network component via at least one additional subscriber line.

16. A computer program product directly loadable into a memory of a digital computer, comprising software code portions for performing the steps of the method (400) according to any of claims 12 or 13.

17. A computer-readable medium having computer-executable instructions adapted to cause a computer system to perform the method (400) according to any of claims 12 or 13.

## Patentansprüche

1. Netzwerkkomponente, die ausgelegt ist zum:
- Bereitstellen eines analogen Kommunikationsdienstes (102) für zumindest eine beim Kunden installierte Ausrüstung (101) über eine Teilnehmerleitung (104); und
- Einstellen zumindest eines elektrischen Parameters des analogen Kommunikationsdienstes (102) basierend auf einem Kriterium der Teilnehmerleitung (104), wobei der elektrische Parameter auf zumindest einem Koeffizienten eines digitalen Signalprozessors basiert, wobei das Einstellen des zumindest einen elektrischen Parameters zum Reduzieren oder Verhindern einer Störung der Kommunikation durch Modifizieren der analogen Signalisierung in Richtung der beim Kunden installierten Ausrüstung (101) dient;
- wobei die Netzwerkkomponente ein Multidienst-Zugriffsknoten oder zumindest eine Komponente davon ist;
- wobei die Netzwerkkomponente eine Teilnehmerleitungstestkomponente (106) umfasst, um das Kriterium der Teilnehmerleitung (104) zu bestimmen,
- wobei der zumindest eine Koeffizient verwendet wird, um ein analoges Signal für den analogen Kommunikationsdienst zu erzeugen,
- wobei die Netzwerkkomponente ferner dazu ausgelegt ist, zumindest einen digitalen Dienst (103) für die zumindest eine beim Kunden installierte Ausrüstung (101) über die Teilnehmerleitung (104) bereitzustellen.

2. Netzwerkkomponente nach einem der vorhergehenden Ansprüche, wobei der zumindest eine Koeffizient von einer externen Vorrichtung, einer Testvorrichtung und/oder einer Verwaltungsvorrichtung geliefert wird.

3. Netzwerkkomponente nach einem der vorhergehenden Ansprüche, wobei der analoge Kommunikationsdienst (102) der analoge Telefondienst (Plain Old Telephone Service) ist.

4. Netzwerkkomponente nach einem der vorhergehenden Ansprüche, wobei der zumindest eine elektrische Parameter eine Signalisierungsinformation umfasst.

5. Netzwerkkomponente nach Anspruch 4, wobei die Signalisierungsinformation zumindest eine der folgenden ist:
- ein Klingeln;
- einen Informationston;
- einen Hörton;
- ein Freizeichen; und/oder
- ein Messimpuls.

6. Netzwerkkomponente nach einem der vorhergehenden Ansprüche, wobei der elektrische Parameter eine Spannung oder ein Strom ist.

7. Netzwerkkomponente nach einem der vorhergehenden Ansprüche, wobei die Netzwerkkomponente dazu ausgelegt ist, einen Zustand der zumindest einen beim Kunden installierten Ausrüstung (101) zu erkennen.

8. Netzwerkkomponente nach einem der vorhergehenden Ansprüche, wobei das Kriterium der Teilnehmerleitung zumindest eines der folgenden ist:
- einen Widerstand der Teilnehmerleitung (104);
- eine Widerstandsschleife der Teilnehmerleitung (104);
- eine Kapazität der Teilnehmerleitung (104);
- eine Induktivität der Teilnehmerleitung (104);
- eine an die Teilnehmerleitung (104) angelegte Speisespannung;
- ein an die Teilnehmerleitung (104) angelegte Speisestrom.

9. Netzwerkkomponente nach einem der vorhergehenden Ansprüche, wobei der digitale Signalprozessor angeordnet ist, um den zumindest einen elektrischen Parameter des analogen Kommunikationsdienstes (102) zu modifizieren.

10. Netzwerkkomponente nach Anspruch 9, wobei zumindest einer der Koeffizienten des digitalen Signalprozessors von einer externen Vorrichtung (113) geliefert oder bereitgestellt wird.

11. Netzwerkkomponente nach einem der vorhergehenden Ansprüche, wobei die Netzwerkkomponente ferner dazu ausgelegt ist, zumindest einen zusätzlichen analogen Kommunikationsdienst (102) und/oder zumindest einen digitalen Dienst für zumindest eine zusätzliche beim Kunden installierte Ausrüstung (101', 101") über zumindest eine zusätzliche Teilnehmerleitung (104', 104") bereitzustellen.

12. Verfahren (400) zum Bereitstellen eines analogen Kommunikationsdienstes (102), der von einer Netzwerkkomponente an zumindest eine beim Kunden installierte Ausrüstung (101) über eine Teilnehmerleitung (104) durchgeführt wird, wobei das Verfahren den folgenden Schritt umfasst:
- Modifizieren (404) eines elektrischen Parameters des analogen Kommunikationsdienstes (102) basierend auf einem Kriterium der Teilnehmerleitung (104), wobei der elektrische Parameter auf zumindest einem Koeffizienten eines digitalen Signalprozessors basiert;
wobei das Modifizieren des elektrischen Parameters zum Reduzieren oder Verhindern einer Störung der Kommunikation durch Modifizieren des analogen Signalisierens in Richtung der beim Kunden installierten Ausrüstung (101) dient
- wobei die Netzwerkkomponente ein Multidienst-Zugriffsknoten oder zumindest eine Komponente davon ist;
- wobei die Netzwerkkomponente eine Teilnehmerleitungstestkomponente (106) umfasst, um das Kriterium der Teilnehmerleitung (104) zu bestimmen,
- wobei der zumindest eine Koeffizient verwendet wird, um ein analoges Signal für den analogen Kommunikationsdienst zu erzeugen,
- Bereitstellen zumindest eines digitalen Dienstes (103) für die zumindest eine beim Kunden installierte Ausrüstung (101) über die Teilnehmerleitung (104).

13. Verfahren nach Anspruch 12, ferner umfassend:
- Erkennen (402) eines Zustands der zumindest einen beim Kunden installierten Ausrüstung (101) und Bestimmen des Kriteriums basierend auf diesem Zustand.

14. System, umfassend:
- eine Netzwerkkomponente nach einem der vorhergehenden Ansprüche 1 bis 11; und
- zumindest eine beim Kunden installierte Ausrüstung (101), die über die Teilnehmerleitung (104) mit der Netzwerkkomponente verbunden ist.

15. System nach Anspruch 14, ferner umfassend:
- zumindest eine zusätzliche beim Kunden installierte Ausrüstung, die über zumindest eine zusätzliche Teilnehmerleitung mit der Netzwerkkomponente verbunden ist.

16. Computerprogrammprodukt, das direkt in einen Speicher eines Digitalcomputers geladen werden kann, der Softwarecodeabschnitte zum Durchführen der Schritte des Verfahrens (400) nach einem der Ansprüche 12 oder 13 umfasst.

17. Computerlesbares Medium mit computerausführbaren Anweisungen, die angepasst sind, um ein Computersystem zu veranlassen, das Verfahren (400) nach einem der Ansprüche 12 oder 13 durchzuführen.

## Revendications

1. Composant de réseau configuré pour :
- fournir un service (102) de communication analogique à au moins un équipement (101) de locaux d'abonné par l'intermédiaire d'une ligne (104) d'abonné ; et
- régler au moins un paramètre électrique du service (102) de communication analogique sur la base d'un critère de la ligne (104) d'abonné, le paramètre électrique étant basé sur au moins un coefficient d'un processeur de signaux numériques, le réglage du ou des paramètres électriques visant à réduire ou à empêcher la perturbation de la communication en modifiant une signalisation analogique vers l'équipement (101) de locaux d'abonné ;
- le composant de réseau étant un noeud d'accès multiservice ou au moins un composant de celui-ci ;
- le composant de réseau comportant un composant (106) de test de ligne d'abonné destiné à déterminer le critère de la ligne (104) d'abonné,
- le ou les coefficients étant utilisés pour générer un signal analogique pour le service de communication analogique,
- le composant de réseau étant en outre configuré pour fournir au moins un service numérique (103) à l'équipement ou aux équipements (101) de locaux d'abonné par l'intermédiaire de la ligne (104) d'abonné.

2. Composant de réseau selon l'une quelconque des revendications précédentes, le ou les coefficients étant fournis par un dispositif externe, un dispositif de test et/ou un dispositif de gestion.

3. Composant de réseau selon l'une quelconque des revendications précédentes, le service (102) de communication analogique étant le service téléphonique traditionnel.

4. Composant de réseau selon l'une quelconque des revendications précédentes, le ou les paramètres électriques comportant une information de signalisation.

5. Composant de réseau selon la revendication 4, l'information de signalisation étant au moins une des suivantes :
- une sonnerie ;
- une tonalité d'information ;
- une tonalité de progression d'appel ;
- une tonalité de numérotation ; et/ou
- une impulsion de taxation.

6. Composant de réseau selon l'une quelconque des revendications précédentes, le paramètre électrique étant une tension ou un courant.

7. Composant de réseau selon l'une quelconque des revendications précédentes, le composant de réseau étant configuré pour détecter un état de l'équipement ou des équipements (101) de locaux d'abonné.

8. Composant de réseau selon l'une quelconque des revendications précédentes, le critère de la ligne d'abonné étant au moins un des suivants :
- une résistance de la ligne (104) d'abonné ;
- une résistance de boucle de la ligne (104) d'abonné ;
- une capacitance de la ligne (104) d'abonné ;
- une inductance de la ligne (104) d'abonné ;
- une tension d'alimentation appliquée à la ligne (104) d'abonné ;
- un courant d'alimentation appliqué à la ligne (104) d'abonné.

9. Composant de réseau selon l'une quelconque des revendications précédentes ;
le processeur de signaux numériques étant agencé pour modifier le ou les paramètres électriques du service (102) de communication analogique.

10. Composant de réseau selon la revendication 9, le ou les coefficients du processeur de signaux numériques étant fourni ou délivré par un dispositif externe (113) .

11. Composant de réseau selon l'une quelconque des revendications précédentes, le composant de réseau étant en outre configuré pour fournir au moins un service supplémentaire (102) de communication analogique et/ou au moins un service numérique à au moins un équipement supplémentaire (101', 101") de locaux d'abonné par l'intermédiaire d'au moins une ligne supplémentaire (104', 104") d'abonné.

12. Procédé (400) de fourniture d'un service (102) de communication analogique réalisé par un composant de réseau à au moins un équipement (101) de locaux d'abonné par l'intermédiaire d'une ligne (104) d'abonné, le procédé comportant les étapes consistant à :
- modifier (404) un paramètre électrique du service (102) de communication analogique sur la base d'un critère de la ligne (104) d'abonné, le paramètre électrique étant basé sur au moins un coefficient d'un processeur de signaux numériques ;
la modification du paramètre électrique visant à réduire ou à empêcher la perturbation de la communication en modifiant une signalisation analogique vers l'équipement (101) de locaux d'abonné
- le composant de réseau étant un noeud d'accès multiservice ou au moins un composant de celui-ci ;
- le composant de réseau comportant un composant (106) de test de ligne d'abonné destiné à déterminer le critère de la ligne (104) d'abonné,
- le ou les coefficients étant utilisés pour générer un signal analogique pour le service de communication analogique,
- fournir au moins un service numérique (103) à l'équipement ou aux équipements (101) de locaux d'abonné par l'intermédiaire de la ligne (104) d'abonné.

13. Procédé selon la revendication 12, comportant en outre :
- la détection (402) d'un état de l'équipement ou des équipements (101) de locaux d'abonné et la détermination du critère d'après cet état.

14. Système comportant :
- un composant de réseau selon une des revendications 1 à 11 qui précèdent ; et
- au moins un équipement (101) de locaux d'abonné relié au composant de réseau par l'intermédiaire de la ligne (104) d'abonné.

15. Système selon la revendication 14, comportant en outre :
- au moins un équipement supplémentaire de locaux d'abonné relié au composant de réseau par l'intermédiaire d'au moins une ligne supplémentaire d'abonné.

16. Produit de programme d'ordinateur directement chargeable dans une mémoire d'un calculateur numérique, comportant des parties de code logiciel destinées à réaliser les étapes du procédé (400) selon l'une quelconque des revendications 12 ou 13.

17. Support lisible par ordinateur comprenant des instructions exécutables par ordinateur conçues pour amener un système informatique à réaliser le procédé (400) selon l'une quelconque des revendications 12 ou 13.
